(19) Europäisches Patentamt
European Patent Office
Office européen des brevets

(11) **EP 4 462 103 A1**

(12) **EUROPEAN PATENT APPLICATION**

(43) Date of publication:
**13.11.2024  Bulletin 2024/46**

(51) International Patent Classification (IPC):
**G01N 17/02** $^{(2006.01)}$

(21) Application number: **23305744.7**

(52) Cooperative Patent Classification (CPC):
**G01N 17/02**

(22) Date of filing: **11.05.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Agence Nationale pour la Gestion des Déchets Radioactifs**
**92298 Châtenay-Malabry Cedex (FR)**
• **La Rochelle Université**
**17071 La Rochelle Cedex 9 (FR)**

• **Centre National de la Recherche Scientifique**
**75016 Paris (FR)**

(72) Inventors:
• **ROBINEAU, Mathieu**
**17000 La Rochelle (FR)**
• **REFAIT, Philippe**
**17300 La Rochelle (FR)**
• **JEANNIN, Marc**
**17690 Angoulins (FR)**

(74) Representative: **IPAZ**
**16, rue Gaillon**
**75002 Paris (FR)**

(54) **ELECTROCHEMICAL METHOD FOR DETERMINING CORROSION RATE OF SAMPLES**

(57)    Electrochemical method for determining a corrosion rate of a sample, said method comprising at least one implementation of a sequence comprising measuring an Open Circuit Potential (OCP) of the sample, then carry out at least one electrochemical measurement using one single electrochemical measurement technique being, for a given sequence:
- an Electrochemical Impedance Spectroscopy (EIS) measurement (EISM), or
- at least two Chrono-Amperometry (CA) measurements (CAM),
the reference OCP value is the last or one of the last OCP values measured or a mean OCP value calculated from the last 0.1% of the OCP values measured; the method further comprises a step of determining the corrosion rate of the sample from the EIS data and/or from the CA data.

FIGURE 15

EP 4 462 103 A1

## Description

### Field of the invention

The present invention relates to the determination of corrosion rate of samples and to the monitoring of the corrosion rate of samples.

The invention pertains to an electrochemical process for, on-site or in laboratories, measurements of the corrosion rate of samples over time.

In particular, the present invention deals with determining and monitoring the corrosion rate of samples subject to harsh corrosion conditions in complex media. The present invention also pertains to determining and monitoring the corrosion rate of inaccessible samples stored for years, decades or more.

One particular field of application of the invention is the real time monitoring of the corrosion rate of buried materials and in particular materials used for radioactive wastes storage.

### Background to the invention

It is known in the art methods for corrosion rate determination based on acoustic waves to measure internal local micro displacements in samples and monitor the thickness variation of the samples. From the thickness variation, the corrosion rate is assessed. Such methods can be used over long distances without attenuation of the signal and without the need to move the measurement sensor.

Despite the many advantages of this method (global control of a pipe, control in inaccessible areas...), it is necessary to have an electrical continuity in order for the measurement results to be valid. Indeed, in the case of radioactive waste management, the presence of welding or stamping between carbon steel segments generates modifications of the signal after only a few meters.

Another type of corrosion rate measurements is gravimetric. This technic is destructive, a piece of the sample of which the corrosion rate is to be determined has to be collected. Moreover, this technic requires to have access to the sample. A thickness variation of the sample is obtained by comparing the mass of the piece of the sample collected to the mass of a control sample. Furthermore, the estimated corrosion rate provides a value over a given time, rather than an instantaneous measurement that is generally better suited to monitor the behavior of a material in its environment.

It is also known in the art electrochemical techniques for corrosion rate determination. Up to now, the electrochemical methods does not provide accurate and reproducible results when the media in which the sample is complex and cause changes of the sample. These changes are caused by the media itself but also by the electrochemical measurements carried out on the sample. Complex media may be acid, alkaline or oxidizing media. Electrochemical measurements require applying a voltage to the sample and/or injecting a current in the media through the sample, which promotes or induces changes in the sample as, for instance, passivation and/or porosity appearance or changes in porosity of the sample for instance.

### Summary of the invention

An object of the invention is to overcome the drawbacks of the state of the art methods.

Another object of the invention is to provide:

- an electrochemical method for corrosion rate determination, and/or
- an electrochemical method for corrosion rate monitoring, and/or
- an accurate and reproducible electrochemical method for corrosion rate determination, and/or
- a method for determining corrosion of samples in complex media, and/or
- a method for determining corrosion of samples stored in inaccessible locations over years or decades.

To this end, there is provided an electrochemical method for determining a corrosion rate of a sample. The method comprises at least one implementation of a sequence. The sequence comprises or consists in:

- measuring an open circuit potential (OCP) of the sample over a time interval higher than or equal to 30 min, then
- carry out at least one electrochemical measurement using one single electrochemical measurement technique.

Preferably, the method comprises the implementation of at least two successive sequences, in other words the method preferably comprises at least two implementation of the sequence.

The single electrochemical measurement technique, preferably the single electrochemical measurement technique of each sequence, is, for a given sequence:

- an Electrochemical Impedance Spectroscopy (EIS) measurement (EISM) carried out by applying a potential difference or by injecting a current, relative to the OCP value of the given sequence, said reference OCP value (Vref), between the sample and a reference electrode, or
- at least two Chrono-Amperometry (CA) measurements (CAM), preferably at least two consecutive CAM, each CAM is carried out by applying a potential difference, relative to the OCP value of the given sequence, said reference OCP value (Vref), between the sample and a reference electrode.

A potential difference applied in at least one of the CAM is different of a potential difference applied in at least one other CAM, preferably the potential difference applied in each CAM is different from the potential difference applied in each of the other CAM. One potential difference or more, preferably each potential difference, is applied for at least 30 seconds and is comprised between 1 and 50 mV.

The reference OCP value is the last or one of the last OCP values measured or a mean OCP value calculated from the last 0.1% of the OCP values measured.

The method further comprises a step of determining the corrosion rate of the sample from the EIS data and/or from the CA data. Preferably, the CA data comprises the CA intensity values measured and the potential differences applied.

Preferably, the sample is comprised and/or arranged and/or disposed in a conductive media suitable for electrochemical measurement. Preferably, the sample is connected to a device arranged and/or suitable and/or configured to carried out electrochemical measurements. Preferably, a counter electrode and the reference electrode or pseudo-reference electrode is comprised and/or arranged and/or disposed in the conductive media.

Preferably, each sequence of the method comprises a different electrochemical measurement technique to be sure that the electrochemical cell or system under study is stable.

Preferably, implementing the OCP measurement as first step of each sequence, that is prior to the at least one electrochemical measurement of each sequence, overcomes the corrosion potential shifting over time and/or causes by electrochemical measurements.

Preferably, the method comprises several successive sequences.

The method may comprises, prior to the at least one electrochemical measurement, a step consisting in calculating a mean OCP value from the last 0.1% of the OCP values measured; the mean OCP value calculated being the reference OCP value.

Depending on the electrochemical measurement technique used in a given sequence, the given sequence, preferably each sequence, may comprise one single or several, preferably several successive, electrochemical measurements.

Preferably, the EISM is carried out by applying a potential difference between the sample and the reference electrode which is higher or equal to 1 mV, preferably to 2.5 mV, more preferably to 5 mV, even more preferably to 7.5 mV, most preferably to 10 mV, even most preferably to 12.5 mV, particularly advantageously to 15 mV, more particularly advantageously to 17.5 mV and even more particularly advantageously to 20 mV and/or lower or equal to 40 mV, preferably to 37.5 mV, more preferably to 35 mV, even more preferably to 32.5 mV, most preferably to 30 mV, even most preferably to 27.5 mV, particularly advantageously to 25 mV, more particularly advantageously to 22.5 mV and even more particularly advantageously to 20 mV.

Preferably, the EISM is carried out by applying the potential difference at a frequency lower or equal to 500 kHz, preferably to 400 kHz, more preferably to 300 kHz, even more preferably to 200 kHz and most preferably to 100kHz and/or at a frequency higher or equal to 0.1 mHz, preferably to 0.25 mHz, more preferably to 0.5 mHz, even more preferably to 0.75 mHz and most preferably to 1 mHz.

The potential difference, preferably each potential difference, for CAM is applied for at least or for 30 seconds, preferably for 1 min, more preferably for 2 min, more preferably for 3 min, even more preferably for 4 min and most preferably for 5 min or more and/or is applied for less than or for 20 min, preferably for 15 min, more preferably for 12.5 min, even more preferably for 10 min, most preferably for 9 min, even most preferably for 8 min, particularly advantageously for 7 min, more particularly advantageously for 6 min and even more particularly advantageously for 5 min or less.

The potential difference, preferably each potential difference, for CAM is higher than or equal to 0.5 mV, preferably to 1 mV, more preferably to 2 mV, even more preferably to 3 mV, most preferably to 4 mV and even most preferably to 5 mV, particularly advantageously to 7.5 mV, more particularly advantageously to 10 mV, even more particularly advantageously to 12.5 mV and in the most preferred manner to 15 mV and/or is less than or equal to 40 mV , preferably to 30 mV, more preferably to 25 mV, most preferably to 20 mV and even most preferably to 15 mV.

Preferably, the mean OCP value is calculated from the last 0.01% of the OCP values measured, preferably from the last 0.025%, more preferably from the last 0.05%, even more preferably from the last 0.075%, most preferably from the last 0.1%, even most preferably from the last 0.25%, particularly advantageously from the last 0.5%, more particularly advantageously from the last 0.75%, even more particularly advantageously from the last 1%, in a particularly preferred manner to 5 % and in the most preferred manner to 10 % of the OCP values measured.

An electrochemical measurement technique may be as defined as the process applied to the sample in order to measure a response from the sample; the response being electrochemical values measured. For instance, the process may comprise, respectively, applying a potential difference between the sample and the reference electrode or polarized the sample relative to the reference electrode or injecting a current through the sample in order to measure the response from the sample, respectively, a current flowing through the sample or a variation of the potential of the sample.

Preferably, a CA intensity value, said stabilized CA intensity value, preferably one single CA intensity value, is obtained from each of the at least two CAM, the stabilized CA intensity value is the last or one of the last CA intensity values measured or a mean CA intensity value calculated from the last 0.1% of the CA intensity values measured.

Preferably, the stabilized CA value is the mean CA intensity value calculated from the last 0.01% of the CA values measured, preferably from the last 0.025%, more preferably from the last 0.05%, even more preferably from the last 0.075%, most preferably from the last 0.1%, even most preferably from the last 0.25%, particularly advantageously from the last 0.5%, more particularly advantageously from the last 0.75%, even more particularly advantageously from the last 1%, in a particularly preferred manner to 5 %, in a more particularly preferred manner to 10%, in an even more particularly preferred manner to 25% and in the most preferred manner to 50 % of the CA values measured.

Preferably, the single electrochemical measurement technique is a Cyclic Voltammetry (CV) measurement, said CVM1, the CVM1 is carried out over a potential window, said $\Delta V1$, lower than 30 mV. Preferably, the corrosion rate is determined from the CVM1 data, in other words the step of determining the corrosion rate may be carried out from the CVM1 data.

Preferably, the potential window over which the CVM1 is carried out is lower or equal to 30 mV to provide accurate measurements and/or to avoid excessive corrosion potential shifting due to the electrochemical measurement. Preferably, the potential window over which the CVM1 is carried out is higher than or equal to 1 mV to provide accurate measurements and/or to avoid corrosion potential shifting during the electrochemical measurement.

Preferably, the potential window over which the CVM1 is carried out is lower than or equal to 30 mV, preferably to 27.5 mV, more preferably to 25 mV, even more preferably to 22.5 mV, most preferably to 20 mV, even most preferably to 19 mV, particularly advantageously to 18 mV, more particularly advantageously to 17 mV, even more particularly advantageously to 16 mV and in the most preferred manner to 15 mV and/or the potential window over which the CVM1 is carried out is higher or equal to 1 mV, preferably to 2.5 mV, more preferably to 5 mV, even more preferably to 7.5 mV, most preferably to 10 mV, even most preferably to 12.5 mV, particularly advantageously to 15 mV.

The potential window over which the CVM1 is carried out may be strictly lower than 30 mV.

Preferably, the CVM1 is carried out at a scan rate higher or equal to 0.001 mV/s to provide accurate measurements and/or to avoid corrosion potential shifting during the electrochemical measurement and/or lower or equal to 5 mV/s to provide accurate measurements and/or to avoid corrosion potential shifting due to the electrochemical measurement.

Preferably, the CVM1 is carried out at a scan rate higher or equal to 0.001 mV/s, preferably to 0.01 mV/s, more preferably to 0.02 mV/s, even more preferably to 0.04 mV/s, most preferably to 0.05 mV/s, even most preferably to 0.06 mV/s, particularly advantageously to 0.07 mV/s, more particularly advantageously to 0.08 mV/s, even more particularly advantageously to 0.09 mV/s and in the most preferred manner to 0.1 mV/s and/or at a scan rate lower or equal to equal to 5 mV/s, preferably to 1 mV/s, more preferably to 0.9 mV/s, even more preferably to 0.8 mV/s, most preferably to 0.7 mV/s, even most preferably to 0.6 mV/s, particularly advantageously to 0.5 mV/s, more particularly advantageously to 0.4 mV/s, even more particularly advantageously to 0.3 mV/s and in a particularly preferred manner to 0.2 mV/s and in the most preferred manner to 0.1 mV/s.

Preferably, the CVM1 comprises at least one scan cycle, each of the scan cycle comprises a forward scan from [Vref] to [Vref+(($\Delta V1$)/2)] then to [Vref-(($\Delta V1$)/2)] then to [Vref] or, respectively, from [Vref] to [Vref-(($\Delta V1$)/2)] then to [Vref+(($\Delta V1$)/2)] then to [Vref] and a reverse scan from [Vref] to [Vref-(($\Delta V1$)/2)] then to [Vref+(($\Delta V1$)/2)] then to [Vref] or, respectively, from [Vref] to [Vref+(($\Delta V1$)/2)] then to [Vref-(($\Delta V1$)/2)] then to [Vref].

Preferably, the CVM1 or each of the at least one scan cycle comprises a continuous variation of the potential over the potential windows. Preferably, the forward scan and the reverse scan are carried out in continuous variation of the potential.

Preferably, the CVM1 comprises a single scan cycle.

The CVM1 may be defined as comprising a forward scan cycle between [Vref+(($\Delta V1$)/2)] and [Vref-(($\Delta V1$)/2)] or, respectively between [Vref-(($\Delta V1$)/2)] and [Vref+(($\Delta V1$)/2)], and reverse scan between [Vref-(($\Delta V1$)/2)] and [Vref+(($\Delta V1$)/2)], or respectively between [Vref+(($\Delta V1$)/2)] and [Vref-(($\Delta V1$)/2)].

Preferably, the single electrochemical measurement technique is a Cyclic Voltammetry (CV) measurement, said CVM2, the CVM2 is carried out over a potential window, said $\Delta V2$, higher than 30 mV. Preferably, the corrosion rate is determined from the CVM2 data, in other words the step of determining the corrosion rate may be carried out from the CVM2 data.

Preferably, the potential window over which the CVM2 is carried out is lower or equal to 150 mV to provide accurate measurements and/or to avoid corrosion potential shifting due to the electrochemical measurement. Preferably, the potential window over which the CVM2 is carried out is higher than or equal to 30 mV to provide accurate measurements and/or to avoid corrosion potential shifting during the electrochemical measurement.

Preferably, the potential window over which the CVM2 is carried out is lower or equal to 200 mV, preferably to 150 mV, more preferably to 125 mV, even more preferably to 100 mV, most preferably to 80 mV, even most preferably to 70 mV, particularly advantageously to 60 mV, more particularly advantageously to 50 mV and/or the potential window over which the CVM2 is carried out is higher or equal to 30 mV, preferably to 32.5 mV, more preferably to 35 mV, even more preferably to 37.5 mV, most preferably to 40 mV, even most preferably to 42.5 mV, particularly advantageously to 45 mV, more particularly advantageously to 47.5 mV and in the most preferred manner to 50 mV.

The potential window over which the CVM1 is carried out may be strictly higher than 30 mV.

Preferably, the CVM2 is carried out at a scan rate higher or equal to 0.001 mV/s to provide accurate measurements and/or to avoid corrosion potential shifting during the electrochemical measurement and/or lower or equal to 10 mV/s to provide accurate measurements and/or to avoid corrosion potential shifting due to the electrochemical measurement.

Preferably, the CVM2 is carried out at a scan rate higher or equal to 0.001 mV/s, preferably to 0.01 mV/s, more preferably to 0.025 mV/s, even more preferably to 0.05 mV/s, most preferably to 0.075 mV/s, even most preferably to 0.1 mV/s, particularly advantageously to 0.125 mV/s, more particularly advantageously to 0.150 mV/s, even more particularly advantageously to 0.175 mV/s and in the most preferred manner to 0.2 mV/s and/or at a scan rate lower or equal to equal to 10 mV/s, preferably to 5 mV/s, more preferably to 1 mV/s, even more preferably to 0.9 mV/s, most preferably to 0.8 mV/s, even most preferably to 0.7 mV/s, particularly advantageously to 0.6 mV/s, more particularly advantageously to 0.5 mV/s, even more particularly advantageously to 0.4 mV/s and in a particularly preferred manner to 0.3 mV/s and in the most preferred manner to 0.2 mV/s.

The step of determining the corrosion rate of the sample may be carried out from EIS data and/or CA data and/or CVM1 data and/or from CVM2 data. EIS data and/or CA data and/or CVM1 data and/or from CVM2 data may comprised or may consist in values related to intensity or current density as a function of potential, voltage and/or time. EIS data and/or CA data and/or CVM1 data and/or from CVM2 data may comprised or may consist in values related to impedance, resistance or capacitance, or the like, as a function of impedance, resistance, capacitance, or the like, or frequency.

Preferably, the CMV2 comprises at least two scan cycles, at least one scan cycle comprises a forward scan from [Vref] to [Vref+(($\Delta$V2)/2)] then to [Vref-(($\Delta$V2)/2)] then to [Vref] and a reverse scan from [Vref] to [Vref-(($\Delta$V2)/2)] then to [Vref+(($\Delta$V2)/2)] then to [Vref], or vice versa, and/or at least one scan cycle comprises a forward scan from [Vref] to [Vref-(($\Delta$V2)/2)] then to [Vref+(($\Delta$V2)/2)] then to [Vref] and a reverse scan from [Vref] to [Vref+(($\Delta$V2)/2)] then to [Vref-(($\Delta$V2)/2)] then to [Vref], or vice versa.

Preferably, each of the at two scan cycles comprises a continuous variation of the potential over the potential windows.

Preferably, the CVM2 comprises two scan cycles.

A scan cycle may be carried out from [Vref] to [Vref+(($\Delta$V2)/2)] then to [Vref-(($\Delta$V2)/2)] then to [Vref] or from [Vref] to [Vref-(($\Delta$V2)/2)] then to [Vref+(($\Delta$V2)/2)] then to [Vref].

Preferably, the at least two scan cycles of the CVM2 are not carried over a continuous variation of the potential. The CVM2 may have no continuous variation of the potential from one scan cycle to another scan circle.

The CVM2 may be defined as comprising at least one scan cycle comprising a forward scan cycle between [Vref+(($\Delta$V2)/2)] and [Vref-(($\Delta$V2)/2)] or, respectively between [Vref-(($\Delta$V2)/2)] and [Vref+(($\Delta$V2)/2)], and reverse scan between [Vref-(($\Delta$V2)/2)] and [Vref+(($\Delta$V2)/2)], or respectively between [Vref+(($\Delta$V2)/2)] and [Vref-(($\Delta$V2)/2)].

The single electrochemical measurement technique may be linear sweep or staircase or differential pulse or square wave voltammetry.

Preferably, the method further comprises the step of calculating regression coefficient(s), preferably linear regression coefficient(s), from the scan cycle(s), preferably for data measured during each scan cycle, and/or from the CVM1 data and/or from the CVM2 data and/or from the CAM data and/or from the EISM data. Preferably, the step of calculating regression coefficient(s), preferably linear regression coefficient(s), is carried out from a forward scan and/or from a reverse scan of one scan cycle. Preferably, the step of determining the corrosion rate of the sample is carried out from the CVM1 and/or CVM2 and/or CAM and/or EISM data adjusted by the regression coefficient(s).

Preferably, the method further comprises the steps of:

- determining a charge transfer resistance of the sample from the EISM data, and/or
- determining a polarization resistance of the sample from the CAM data and/or from the CVM1, and/or
- determining a corrosion current density of the sample from the CVM2, and
- determining the corrosion rate of the sample from the charge transfer resistance and/or from the polarization resistance and/or the corrosion current density.

Preferably, the method comprises at least two sequences and each sequence comprises a different single electrochemical measurement technique; in other words, the method comprises at least two implementation of the sequence and each sequence implemented comprises a different single electrochemical measurement technique.

The at least two sequences may be carried out successively more preferably immediately one after another or in a row. The at least two sequences are preferably carried out successively to avoid corrosion potential shifting.

Preferably, a time separating the at least two sequences is higher than or equal to half, preferably to one-fourth, more preferably to a one-sixth, even more preferably to one-tenth, most preferably to one-twelfth, even most preferably to a fifteenth, advantageously to a twentieth, particularly advantageously a thirtieth, more particularly advantageously to a fortieth, even more particularly advantageously to a fiftieth and in the most preferred manner to a sixtieth, of the total duration of the study.

Preferably, carrying out at least two sequences, wherein each sequence comprises a different single electrochemical measurement technique, provide at least two corrosion rate values. Hence, each of the corrosion rate value is determined from electrochemical measurement data obtained from a different electrochemical measurement technique. Then, preferably, carried out at least two sequences provide a more accurate assessment of the corrosion rate of the sample.

The inventors observed that each electrochemical measurement can involves a shifting of the corrosion potential. Each electrochemical measurement technique can involve a shifting of the corrosion potential to a different extend without logical or straightforward trends. Hence, if not carried out according to the invention, preferably according to the priority order and/or in the running order according to the invention, the corrosion rate value assessed is less accurate. To that end, it is preferable to carried out:

- sequence(s) wherein the at least one electrochemical measurement step exhibits or requires lower potential difference(s) prior to sequence(s) wherein the at least one electrochemical measurement step exhibits or requires higher potential difference(s), and/or
- sequence(s) wherein the at least one electrochemical measurement step exhibits or requires lower measurement time prior to sequence(s) wherein the at least one electrochemical measurement step exhibits or requires higher measurement time.

Preferably, the method comprises several successive sequences and the sequences are implemented so that:

- the potential difference(s) of the at least one electrochemical measurement step of a given sequence is higher than the potential difference(s) of the at least one electrochemical measurement step of previous sequence(s) and/or the potential difference(s) of the at least one electrochemical measurement step of a given sequence is lower than the potential difference(s) of the at least one electrochemical measurement step of subsequent sequence(s), and/or
- the measure time of the at least one electrochemical measurement step of a given sequence is higher than the measurement time of the at least one electrochemical measurement step of previous sequence(s) and/or the measurement time of the at least one electrochemical measurement step of a given sequence is lower than the measurement time of the at least one electrochemical measurement step of subsequent sequence(s).

Preferably, the time interval over which is carried out the OCP measurement step is set and/or determined according to the particular electrochemical system under study. Preferably, the time interval over which is carried out the OCP measurement step is set and/or determined so that the measured OCP reaches a stable value, that is the electrochemical system under study reaches its steady state. The inventors observed that such an implementation provides accurate values of corrosion rate. Such an implementation allows avoiding effects of corrosion potential shifting over time and/or carried out measurements in the steady state of the system.

Preferably, a sequence comprising a CVM1 as single electrochemical measurement technique is carried out previously to a sequence comprising an EISM as single electrochemical measurement technique and/or to a sequence comprising a CAM as single electrochemical measurement technique. The inventors observed that such a sequence provides more accurate values of corrosion rate.

The inventors observed that, when carried out independently, CVM1 provides less accurate values of corrosion rate than CVM2 and EISM. Nevertheless, the inventors also observed that carrying out a sequence comprising EISM as single electrochemical measurement technique and/or a sequence comprising CVM2 as single electrochemical measurement technique before a sequence comprising CVM1 as single electrochemical measurement technique, involves more corrosion potential shifting and so less accurate values of corrosion rate determined.

Preferably, a sequence comprising an EISM as single electrochemical measurement technique is carried out previously to a sequence comprising a CVM2 as single electrochemical measurement technique. The inventors observed that such a sequences implementation provides accurate values of corrosion rate.

Preferably, a sequence comprising an EISM as single electrochemical measurement technique is carried out subsequently to a sequence comprising a CAM as single electrochemical measurement technique and/or to a sequence comprising a CVM1 as single electrochemical measurement technique. The inventors observed that such a sequences implementation provides more accurate values of corrosion rate.

The inventors observed that, when carried out independently, EISM provides more accurate values of corrosion rate than CVM1 and CAM. Nevertheless, the inventors also observed that carrying out a sequence comprising EISM as single electrochemical measurement technique before a sequence comprising CVM1 as single electrochemical measurement technique and/or a sequence comprising CAM as single electrochemical measurement technique, involves more corrosion potential shifting and so less accurate values of corrosion rate determined.

Preferably, a sequence comprising a CVM2 as single electrochemical measurement technique is carried out subsequently to a sequence comprising a CAM as single electrochemical measurement technique and/or to a sequence comprising a CVM1 as single electrochemical measurement technique and/or to a sequence comprising an EISM as single electrochemical measurement technique. The inventors observed that such a sequence provides more accurate values of corrosion rate.

The inventors observed that, when carried out independently, CVM2 provides more accurate values of corrosion rate than CVM1 and CAM. Nevertheless, the inventors also observed that carrying out a sequence comprising CVM2 as single electrochemical measurement technique before a sequence comprising CVM1 as single electrochemical measurement technique and/or a sequence comprising CAM as single electrochemical measurement technique and/or a sequence comprising EISM as single electrochemical measurement technique, involves more corrosion potential shifting and so less accurate values of corrosion rate determined.

In a preferred manner, the method comprises:

- a sequence comprising a CVM1 as single electrochemical measurement technique, then
- a sequence comprising a CAM as single electrochemical measurement technique, then
- a sequence comprising an EISM as single electrochemical measurement technique
- at least one sequence, preferably two sequences, comprising a CVM2 as single electrochemical measurement technique.

Between each of these methods, it is imperative to monitor OCP values and ensure that the system returns to its previous steady state before starting the next method.

The inventors observed that such a sequences implementation provides the most accurate values of corrosion rate.

Preferably, a mean value of the corrosion rate of the sample is calculated from two or more corrosion rate values, at least two corrosion rate values being determined from data measured by at least two different sequences.

Preferably, the step of determining the corrosion rate is implemented after each of the sequences of the method or after the last sequence of the method.

The method may be carried out by a device comprising a processing unit arranged and/or configured and/or programmed to carried out, or to command a sub-unit suitable to carried out, the electrochemical measurements steps according to the method. Preferably, the processing unit carries out the determination and/or the calculation steps of the method. Preferably, the sub-unit is a potentiostat, the like, or every device suitable to carry out electrochemical measurements.

According to the invention, it is also provided a data processing apparatus or a device or a system comprising means for carrying out, preferably a processor adapted to or arranged or configured to perform, the method according to the invention.

According to the invention, it is also provided a computer program comprising instructions which, when the program is executed by a computer, cause the computer to carry out the method according to the invention.

According to the invention, it is also provided a computer-readable medium, preferably a storage medium or data carrier, for example a flash drive or the like, comprising instructions which, when executed by a computer, cause the computer to carry out the method according to the invention.

## Brief description of the drawings

Further inventive objects, features and advantages will become apparent from the following detailed description of several embodiments of the invention with references to the drawings, in which:

- FIGURE 1 is a schematic side view of an embodiment of an electrochemical setup used to carry out the method according to the invention,
- FIGURE 2 is a schematic side view of an embodiment of another electrochemical setup used to carry out the method according to the invention,

- FIGURE 3 is a graph illustrating an example of a curve obtained from an OCP measurement,
- FIGURE 4 is a graph illustrating an example of a curve obtained from a sequence comprising chronovoltammetry (CVM1) as single electrochemical measurement technique and illustrating the straight line obtained by linear trend estimation from the measured data,
- FIGURE 5 is a graph illustrating an example of a curve obtained from a sequence comprising chronoamperometry (CAM) as single electrochemical measurement technique, the illustrated chronoamperometry curve has been obtained at a potential of +15 mV relative to the OCP value measured,
- FIGURE 6 illustrates an example of the straight line obtained by linear trend estimation from the six mean intensity values obtained in a sequence comprising chronoamperometry (CAM) as single electrochemical measurement technique, the sequence comprises six successive CAM obtained at +15, +10, +5, -5, -10 and - 15 mV relative to the OCP value measured,
- FIGURES 7 and 8 show an example of data, respectively plotted in a Nyquist diagram and in a bode diagram, obtained from a sequence comprising Electrochemical Impedance Spectroscopy (EIS) measurement (EISM) as single electrochemical measurement technique,
- FIGURE 9 is a schematic representation of the equivalent circuit used as model for regression analysis of the data obtained from the sequence comprising Electrochemical Impedance Spectroscopy (EIS) measurement (EISM) as single electrochemical measurement technique,
- FIGURE 10 illustrates an example of a curve obtained from a sequence comprising chronovoltammetry (CVM2) as single electrochemical measurement technique,
- FIGURE 11 illustrates an example of a curve obtained from a sequence comprising chronovoltammetry (CVM2) as single electrochemical measurement technique,
- FIGURE 12 illustrates the curves $\log |J_a| = f(E)$ and $\log |J_c| = f(E)$, respectively calculated from the data illustrated FIGURE 10 and FIGURE 9, and the the faradic current density $Jf = f(E)$ calculated according to the formula $J_f = (J_a + J_c)/2$,
- FIGURE 13 illustrates the fitted curve $Jf = f(E)$ and the Tafel lines obtained from regression analysis of the data $Jf = f(E)$ plotted FIGURE 11,
- FIGURE 14 shows the corrosion rates of three samples in a heterogeneous environment, mounted for the same duration in the same electrochemical setup, determined from the method according to the invention,
- FIGURE 15 is a histogram illustrating corrosion rates of a sample determined, from each sequences according to the particular embodiment of the electrochemical method, according to the particular calculation methods described in the particular embodiment of the electrochemical method compared to the corrosion rate of the sample determined by gravimetric measurement.

**Detailed description of embodiments of the invention**

The embodiments hereinafter described are not restrictive; other embodiments comprising a selection of features described hereinafter may be considered. A selection may comprise features isolated from a set of features (even if this selection is isolated among a sentence comprising other features thereof), if the selection is sufficient to confer a technical advantage or to distinguish the invention form the state of the art. This selection comprises at least a feature, preferably described by its technical function without structural features, or with a part of structural details if this part is sufficient to confer a technical advantage or to distinguish the invention form the state of the art on its own.

It is described an embodiment of the electrochemical method for determining the corrosion rate of a sample according to the invention. The field of application of the present embodiment relates to radioactive wastes storage. Such storage requires real time in-situ assessment of the corrosion rate of storage materials over several tens of years. The non-limiting embodiment pertains to intermediate level long-lived waste and high-level radioactive waste. In particular, such storage requires to embed radioactive waste in a package and to bury it deep in a stable geological environment. The non-limiting embodiment refers to "Cigéo projet", in which the package will be buried inside tunnels at a depth of 500 meters. In the underground site, a Callovo-Oxfordian geological layer is present and consists of argillites. This stable layer is 145 meters thick and has a very low permeability. Within the argillite layer, it is planned to dig galleries with a diameter of 90 cm and to insert steel pipes inside them. These pipes will allow the reversibility of radioactive waste packages, that is go back to a previous state, continue as planned or modify, or stop, the storage throughout its course. It is planned to inject a specific cement grout between the carbon steel casing and the argillites. Despite tunnel cleaning, fragments of argillites will remain in contact with the carbon steel casing. Thus, small zones of the steel surface in contact with argillites should be surrounded by large zones in contact with cement grout. The radioactivity will increase the temperature of the casing around 80/90°C. Such a complex system (stainless steel package/cement grout/argillites pockets) under harsh conditions (radioactivity and high temperatures) will involve corrosion of the carbon steel casing. Such corrosion has to be long term monitored without any possible access to the package. The system will consist of steel areas covered by argillites and steel areas covered by cement grout. Such system may favour corrosion cells as it involves heterogeneous corrosion product layers containing various electronic conductors.

The present description seeks to demonstrate the efficiency of the method to assess corrosion rate of samples under harsh corrosion conditions in complex media. In the particular embodiment, the studied sample is a piece of carbon steel 1 embedded in cement grout 2. The material studied 1 is API 5L X65 carbon steel. Its nominal composition in weight % is: 98.09 % Fe, 0.041 % C, 0.33 % Si, 1.33 % Mn, 0.009 % P, 0.002 % S, 0.056 % Cr, 0.015 % Mo, 0.041 % Ni, 0.029 % Cu, 0.042 % Nb, 0.016 % Ti and < 0.005 % V. The composition of the cement grout 2, which is the one chosen in Cigéo project, is described in the patent application FR3031103A1. Preliminary experiments showed the difficulty to predict behavior of steel in contact with cement grout. One of the specificities of the cement grout is its pH. Its pH is 10.7 at 20°C. The question was whether this value was high enough to allow the steel to passivate. The first measurements in the presence of the cement grout and/or of its pore water showed the presence of parasitic current together with hysteresis precluding proper exploitation of the results.

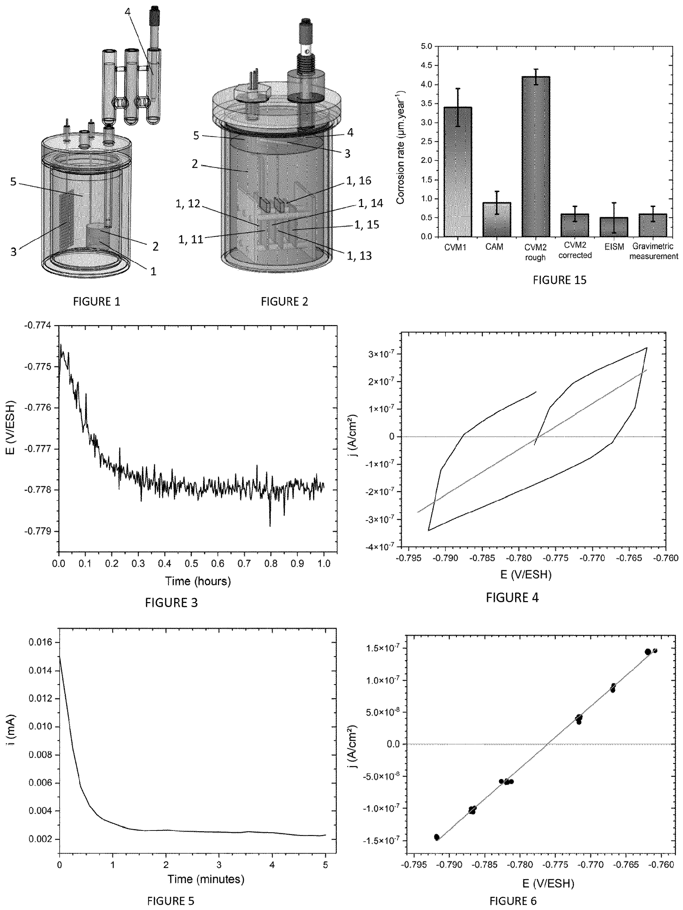

Different electrochemical setups are used for the measurements. Two setups, respectively setup 1 and setup 2, are illustrated FIGURES 1 and 2. In each of the setups, the piece of carbon steel 1 is used as working electrode in a three electrodes arrangement further comprising a counter electrode 3 and a reference electrode 4. In each setup, the piece of carbon steel 1 is embedded in or covered with cement grout 2. The piece of carbon steel 1 is electrically connected to a potentiostat through an insulated cable. The cement grout 2 is in contact with an electrolytic solution comprising 0.01 M (Mol/L) of NaCl and 0.01 M of $NaHCO_3$ at pH = 7±0.1 at 25°C for the setup 1 and an electrolytic solution comprising 0.0055 M of $Na_2SiO_3$, $5H_2O$, $9.3897 \times 10^{-6}$ M of KCl, 0.0252 M of $K_2SO_4$, 0.0017 M of $Na_2SO_4$, $5.2971 \times 10^{-4}$ M of $CaSO_4$, $2H_2O$, $4.8318 \times 10^{-4}$ M of $Al_2(SO_4)_3$, $18H_2O$ and $6.4397 \times 10^{-4}$ M of $NaHCO_3$ at pH = 12±0.1 at 25°C for the setup 2. The electrolytic solution diffuses through the cement grout 2, which is porous, towards the carbon steel 1. Platinum is used as counter electrode and immersed in the electrolyte. A reference electrode called Red/Rod sold by the company Radiometer Analytical® is used and immersed in the electrolyte. In setup 1, a three compartments extension is used to avoid diffusion of the electrolyte in the reference electrode 4 liquid media, which is 3M KCl according to the embodiment. The first compartment contains the electrolyte in contact with cement grout 2, the second compartment contains a mixture of a 3M KCl solution and the electrolyte and the last compartment, wherein the reference electrode 4 is immersed, is filled with a 3M KCl solution. The setup 2 contains several piece of carbon steel 1, 11, 12, 13, 14, 15, 16 embedded in the cement grout 2. Pieces 11, 12 and 13 are used for electrochemical measurements according to the invention while pieces 14, 15 and 16 are used to carry out gravimetric measurements in parallel. Results obtained by the method according to the invention was in good agreement with those obtained by gravimetry, which is the reference technique for corrosion assessment.

The method according to the embodiment comprises at least one implementation of a sequence. Each sequence comprises the steps consisting in:

- measuring the Open Circuit Potential (OCP) of the sample over a time interval higher than or equal to 30 min, then
- carry out at least one electrochemical measurement using one single electrochemical measurement technique.

According to the invention, the single electrochemical measurement technique is, for a given sequence:

- an Electrochemical Impedance Spectroscopy (EIS) measurement (EISM) carried out by applying a potential difference, relative to the OCP value of the given sequence, said reference OCP value (Vref), between the sample and a reference electrode, or
- at least two Chrono-Amperometry (CA) measurements (CAM), each CAM is carried out by applying a potential difference, relative to the OCP value of the given seuqence, said reference OCP value (Vref), between the sample and a reference electrode, a potential difference applied in at least one of the CAM is different of a potential difference applied in at least one other CAM, each potential difference is applied for at least 30 seconds and is comprised between 1 and 50 mV.

According to the invention, the reference OCP value is the last or one of the last OCP values measured or a mean OCP value calculated from, at least, the last 0.1% of the OCP values measured. According to the non-limiting embodiment, a time interval for OCP measurement is predetermined and set to 1 hour for each of the sequences. This time interval may has been set to a different value or determined and/or set during the OCP measurement(s). For instance, the OCP measurement may stopped when a rate of change of the measured value of the OCP drops below a predetermined threshold.

The method further comprises the step of determining the corrosion rate of the sample from the EIS data and/or from the CA data.

Typically, the time interval over which the measurement of the OCP is carried out may depend of the at least one electrochemical measurement step of the previous sequence. High potential differences, typically higher than 20 mV, and/or high measurement times, typically higher than 10 minutes, of the at least one electrochemical measurement step will significantly increase the time needed for the electrochemical system to return to a steady state. Thus, during the OCP measurement and from the OCP values measured or from a variation of the OCP values measured, the method can comprise a step of determining the return to a steady state of the electrochemical system. Using an OCP value that does not correspond to the OCP value of the steady state of the system will provide inaccurate values of the corrosion rate.

On another hand, carried out the electrochemical measurement step using inappropriate electrochemical measurements parameters will also provide inaccurate values of the corrosion rate. Indeed, applying too high potential differences and/or too long measurement times will involve a shift of the OCP value during the electrochemical measurement step.

According to a non-restrictive embodiment, and as illustrated in table 1, it is described the implementation of five sequences. Other embodiments, in agreement with the scope of the invention described in the present application, comprising a different number of sequences implemented, different sequences, different sequences combination and/or different electrochemical measurement parameters may also produce the technical effects and solve the technical problems according to the invention.

Table 1

| Sequences | Steps | Electrochemical technique |
|---|---|---|
| 1 | OCP measurement | OCP |
| | Electrochemical measurement(s) | CVM1 |
| 2 | OCP measurement | OCP |
| | Electrochemical measurement(s) | CAM |
| 3 | OCP measurement | OCP |
| | Electrochemical measurement(s) | EISM |
| 4 | OCP measurement | OCP |
| | Electrochemical measurement(s) | CVM2 |
| 5 | OCP measurement | OCP |
| | Electrochemical measurement(s) | CVM2 |

The electrochemical results illustrated FIGURES 3 to 14 hereinafter have been obtained with the setup 2.

According to the embodiment, and in reference to FIGURES 3 and 4, the method comprises a first sequence comprising an OCP measurement illustrated FIGURE 3 and a Cyclic Voltammetry Measurement, said CVM1, as single electrochemical measurement technique illustrated FIGURE 4. The OCP value measured prior to the CVM1 is -0.778 V relative to Standard Hydrogen Electrode (SHE) used as reference electrode 4. According to the present description, the OCP value used for each single electrochemical measurement technique of each sequence is the last value of OCP measured during OCP measurement. Cyclic Voltammetry consists in varying a voltage applied between the working electrode 1 and the reference electrode 4 and measuring the current between the working electrode 1 and the counter-electrode 3. The CVM1 is carried out over a potential window, said $\Delta V1$, of 30 mV relative to the OCP value measured, that is OCP $\pm$ 15 mV. The potential is continuously swept from -0.778 V (OCP value) to -0.748 V then from -0.748 to -0.808 V and then from -0.808 to -0.778 V (OCP value). The linear regression straight line is calculated from the measured data J=f(E) illustrated FIGURE 4, in which J is the current density (A/cm$^2$) and E is the potential (Volts). The polarization resistance ($R_p$) is, at the OCP (that is the corrosion potential of the working electrode 1), equal to the inverse of the slope coefficient of the linear regression straight line and may be defined as

$$J_{corr}=B/R_p, \text{ equation 1}$$

in which B is a predetermined value (depending of the studied system) and $J_{corr}$ is the corrosion current density. The value of B can be predetermined, assessed or calibrated prior to the implementation of the method according to the invention. The inventors observed that, for CVM1, a value of 20 mV for B is suitable for most of the situation. Then a corrosion rate $V_{corr}$ of 3.8 $\mu$m/year has been determined using the following formula

$$V_{corr}=J_{corr}\cdot(M/(n\cdot\rho\cdot F)), \text{ equation 2}$$

in which M is the atomic mass of iron (55.85 g/mol), n is equal to 2 (the number of electrons exchanged), $\rho$ is the density of iron (7.87 g/cm$^3$) and F is the Faraday constant. Measuring the forward and backward curves during the CVM1 allows overcoming the hysteresis effect observed with complex electrochemical system such as the one according to the embodiment.

According to the embodiment, and in reference to FIGURES 5 and 6, the method comprises a second sequence comprising Chrono-Amperometry (CA) as single electrochemical measurement technique. CAM consists in applying a constant voltage between the working electrode 1 and the reference electrode 4 and measuring the current between the working electrode 1 and the counter-electrode 3. According to the embodiment, six distinct and successive Chrono-Amperometry Measurements (CAM) have been carried out at -15, -10, -5, +5, +10 and +15 mV relative to the OCP. The OCP value measured prior to the CAM is -0.776 V relative to SHE reference electrode 4. Thus, six distinct CAM curves i=f(t), in which t is the time in hours, have been obtained. Each of the six CAM measurements has been carried out during a time interval of 5 minutes. Figure 5 shows the CAM curve obtained from +15 mV voltage relative to OCP. The mean intensity i of each CAM has been calculated from the last 10% of intensity values measured. The six mean intensities calculated has been plotted according to their respective voltage in FIGURE 6. The linear regression is calculated from these data to obtain the straight line J=f(E) depicted FIGURE 6. As detailed for the first sequence hereinabove, the corrosion rate V$_{corr}$ of 2.2 $\mu$m/year has been determined from the straight line J=f(E) obtained and from the equations 1 and 2.

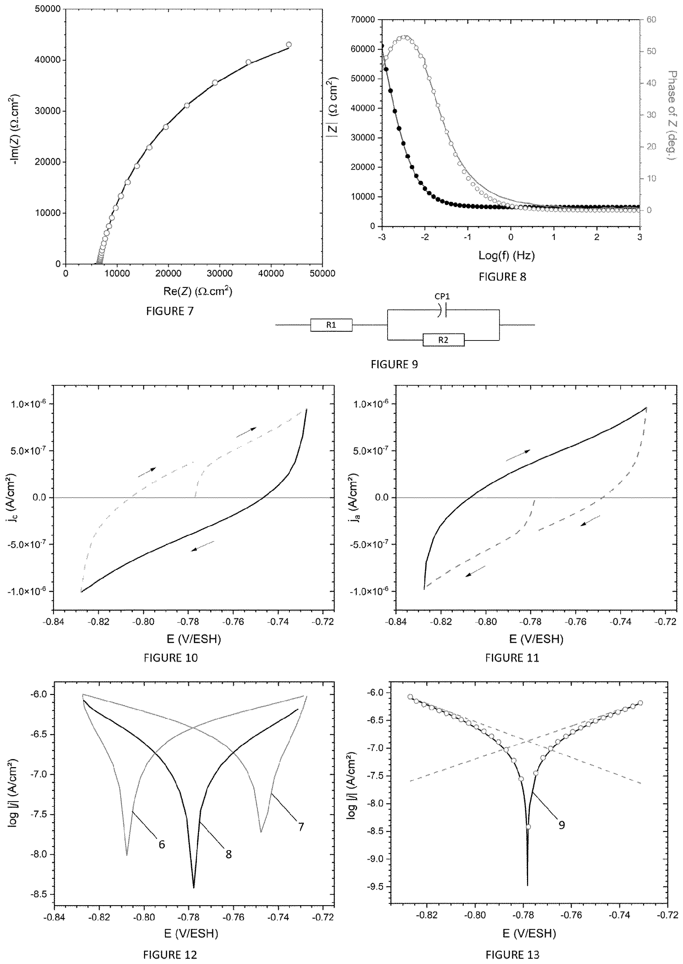

According to the embodiment, and in reference to FIGURES 7 to 9, the method comprises a third sequence comprising an Electrochemical Impedance Spectroscopy (EIS) measurement (EISM) as single electrochemical measurement technique. The OCP value measured prior to the EISM is -0.778 V relative to SHE reference electrode 4. EISM consists in applying an alternative voltage between the working electrode 1 and the reference electrode 4 and measuring the current between the working electrode 1 and the counter-electrode 3. The applied voltage $\Delta$V is 20 mV according to the embodiment, that is OCP $\pm$ 10 mV. The frequency of the alternative voltage applied varies between 100 kHz and 1 mHz according to the embodiment. Ten points per decade are measured according to the embodiment. The measured data are plotted in a Nyquist diagram in FIGURE 7 and in a Bode diagram in FIGURE 8. To assess electrochemical parameters of the electrochemical system from EIS data, an equivalent electrical circuit that fits the electrochemical system studied needs to be chosen. According to the embodiment, the equivalent circuit illustrated FIGURE 9 has been chosen. It is noted that other equivalent circuits may have been chosen. This equivalent circuit comprises a resistance R1 that corresponds to the electrolyte resistance, a resistance R2 that corresponds to the charge transfer resistance at the interfaces of the working electrode 1 and a CPE1 that corresponds to the capacitive and pseudo-capacitive phenomena at the interfaces of the working electrode 1. The impedance Z(w) of the equivalent circuit is

$$Z(w) = R1 + \frac{1}{\left(\left(\frac{1}{R2}\right) + j \cdot CPE1 \cdot w\right)}, \text{ equation 3}$$

 in which Z is the impedance of the system and w is the frequency of the alternative voltage applied.

From equation 3, a non linear regression analysis is carried out to calculate and adjust the values of R1, R2 and CPE1 so that equation 3 fits the EIS data measured. From the value the simulated value of R2, the corrosion current density has been calculated from equation 1. The value of B in equation 1 can be predetermined, assessed or calibrated prior to the implementation of the method according to the invention. Nevertheless, preferably but not necessarily, the value of B is determined for each system studied and depends on the electrochemical system (working electrode, counter electrode, electrolyte...). The inventors observed that, for EIS, B can be express as

$$B = \frac{RT}{F} \cdot \frac{1}{(\alpha_a \cdot n_a) + (\alpha_c \cdot n_c)} \cdot \frac{1}{R2}, \text{ equation 4}$$

in which R is the molar gaz constant, T the temperature of the system, $\alpha_a$ is the anodic charge transfer coefficient, $\alpha_c$ is the cathodic charge transfer coefficient, $n_a$ is the number of electrons exchanged in the anodic reaction and $n_c$ is the number of electrons exchanged in the cathodic reaction. The oxidation state of iron may be 2 or 3. In the present embodiment, it has been found that a value of 1 for the product $\alpha_a \cdot n_a$ (with $\alpha_c$ equal to 0.5 and $n_c$ equal to 2) and a value of 1.5 for the product $\alpha_a \cdot n_a$ (with $\alpha_a$ equal to 0.5 and $n_a$ equal to 3) is particularly suitable. Then a corrosion rate V$_{corr}$ of 2 $\mu$m/year has been determined using the following formula 2.

According to the embodiment, and in reference to FIGURES 10 and 11, the method comprises a fourth and a fifth sequences each comprising Cyclic Voltammetry (CV) measurement, said CVM2, as single electrochemical measurement technique. The OCP value measured prior to the CVM1 is -0.777 V relative to SHE reference electrode 4 for the fourth sequence and -0.778 V relative to SHE reference electrode 4 for the fifth sequence. For each of the fourth and fifth sequences, the CVM2 is carried out over a potential window, said ΔV2, of 100 mV relative to the OCP value measured, that is OCP ± 50 mV.

For the fourth sequence, the potential is continuously swept from -0.777 V (the OCP value) to -0.727 V then from -0.727 to -0.827 mV and then from -0.827 to -0.777 mV. The curve $J_c$=f(E), in which $J_c$ is the cathodic current density, that corresponds to potential values from -0.727 to -0.827 mV of CVM2 is illustrated in solid line FIGURE 10. A corrosion rate $V_{corr}$ of 3.7 μm/year has been determined using the following formula 1 and 2 as described for the first sequence.

For the fifth sequence, the potential is continuously swept from -0.778 V (the OCP value) to -0.728 V then from -0.728 to -0.828 mV and then from -0.828 to -0.778 mV. The curve $J_a$=f(E), in which $J_a$ is the anodic current density, that corresponds to potential values from -0.728 to -0.828 mV of CVM2 is illustrated FIGURE 11. A corrosion rate $V_{corr}$ of 3.8 μm/year has been determined using the following formula 1 and 2 as described for the first sequence. A mean corrosion value, said VCM2 rough, has been calculated from the corrosion rate $V_{corr}$ determined from $J_c$=f(E) and from the corrosion rate $V_{corr}$ determined $J_a$=f(E) and is equal to 3.75 μm/year.

For each of the fourth and fifth sequences, in an improvement of the presented embodiment, the determination of the corrosion rate, said CVM2 corrected, has been determined. According to the improvement, the log $|J_a|$ =f(E) 6 and log $|J_c|$ = f(E) 7 have been calculated and plotted FIGURE 12. In this improvement, in order to overcome the corrosion potential shifting and increase the accuracy of the corrosion rate assessment, the faradic current density Jf=f(E) has been calculated according to the following formula:

$$J_f=(J_a+J_c)/2, \text{ equation 5.}$$

log $|J_f|$ =f(E) 8 has been calculated and plotted FIGURE 13. From the data log $|J_f|$ =f(E) 8, a non linear regression analysis is carried out to adjust these data so that they fit the Tafel model in the case of the pure charge transfer. The fitted curve log $|J_f|$ =f(E) 9, illustrated FIGURE 13, is plotted from the fitted data. From the fitted data, the slope of asymptotes of the cathodic and anodic kinetics that can be compared to the Tafel lines are determined and the corrosion rate is calculated according to the intersection of these asymptote, i.e, the corrosion current density. A corrosion rate $V_{corr}$, said CVM2 corrected, of 1.6 μm/year has been determined.

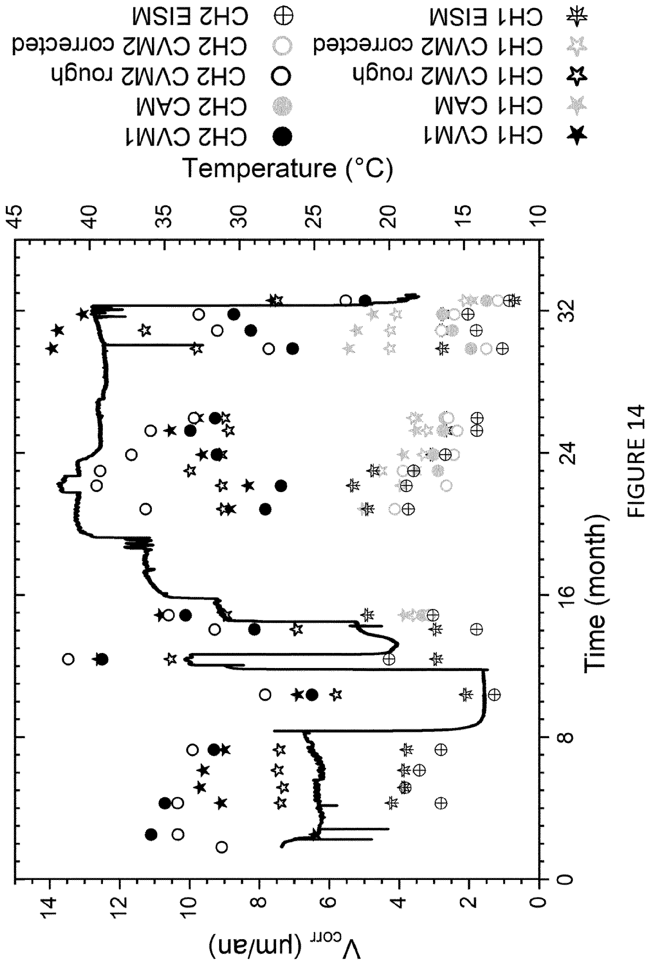

In another embodiment, the method has been carried alongside on two samples, called CH1, and CH2, in parallel in the same electrochemical setup. As described above, the piece of carbon steel 1 is used as working electrode 1 in a three electrodes arrangement further comprising a counter electrode 3 and a reference electrode 4. The sample comprises a piece of carbon steel 1 embedded at a depth of 500 meters, at the underground site of the "Cigéo projet", in the cement grout 2 made of Callovo-Oxfordian geological layer. Measurements were carry out during 34 months and the temperature of the samples has been recorded. The method described above in table 1 has been carried out for CH1 and CH2. Corrosion rates $V_{corr}$ has been calculated, according to the embodiment, for each sequences, i.e sequences 1 to 5, and are reported FIGURE 14. According to FIGURE 14, the data referenced CVM1 refers to $V_{corr}$ calculated from the first sequence, the data referenced CAM refers to $V_{corr}$ calculated from the second sequence, the data referenced EISM refers to $V_{corr}$ calculated from the third sequence, the data referenced "CVM2 rough" and "CVM2 corrected" refers to $V_{corr}$ calculated from the forth and fifth sequences as described above. It can be seen that the method according to the invention allows determining corrosion rates $V_{corr}$ with high reproducibility regardless the duration and without time limit. Moreover, unlike the gravimetric technique, the method according to the invention in non-destructive and there is no need to remove the sample under study from the media nor to have directly interact with the sample under study.

In another embodiment, two pieces of carbon steel 1 has been embedded in cement grout 2 in a setup equivalent to setup 2. The cement grout 2 is in contact with an electrolytic solution comprising 0,01 M of NaCl and 0,01 M of NaHCO3 at pH 12 and at 25°C. The method described above in table 1 has been carried out on one of the two pieces of carbon steel 1. Corrosion rates $V_{corr}$ has been calculated, according to the embodiment, for each sequences, i.e sequences 1 to 5, and are reported FIGURE 15. As described above, the piece of carbon steel 1 is used as working electrode 1 in a three electrodes arrangement further comprising a counter electrode 3 and a reference electrode 4. On the other of the two samples 1, the corrosion rate has been calculated through the gravimetric method and is reported FIGURE 15. It can be seen that the corrosion rates $V_{corr}$ calculated according to the method according to the invention are in good agreement with the corrosion rates $V_{corr}$ calculated from gravimetric measurements. The corrosion rates $V_{corr}$ calculated from sequences 2 to 5 exhibit values nearly identical to those calculated from gravimetric measurements. Regarding the fourth and the fifth sequences, $V_{corr}$ will preferably be calculated from the calculation method "CVM2 corrected" described above.

The particular embodiment in the present description is a mere example and does not limit the scope of the invention to a specific sample, a specific system or a specific application. The invention can be implement to assess electrochemically the corrosion of any samples in any condition and environment, for example in laboratory or on-site plants or facilities, for routine process, characterization, calibration or monitoring.

Furthermore, the particular determinations and calculations of the corrosion rate $V_{corr}$ according to the embodiment does not limit the scope of the invention to these particular examples.

The invention is not restricted to embodiments described above and numerous adjustments may be made within the scope of the invention.

Thus, in combinable alternatives of previous embodiments:

- the mean value of the corrosion rate $V_{corr}$ is calculated from two or more corrosion rate values $V_{corr}$ determined from data measured by at least two different sequences, and/or
- it is proposed a data processing apparatus comprising means for carrying out the method according to the invention, and/or
- it is proposed a computer program comprising instructions which, when the program is executed by a computer, cause the computer to carry out the method according to the invention, and/or
- it is proposed a computer-readable medium comprising instructions which, when executed by a computer, cause the computer to carry out the method according to the invention.

**Claims**

1. Electrochemical method for determining a corrosion rate of a sample, said method comprising at least one implementation of a sequence, said sequence comprising:

   - measuring an Open Circuit Potential (OCP) of the sample over a time interval higher than or equal to 30 min, then
   - carry out at least one electrochemical measurement using one single electrochemical measurement technique;

   said single electrochemical measurement technique is, for a given sequence:

   - an Electrochemical Impedance Spectroscopy (EIS) measurement (EISM) carried out by applying a potential difference lower or equal to 40 mV, relative to the OCP value of the given sequence, said reference OCP value (Vref), between the sample and a reference electrode, or
   - at least two Chrono-Amperometry (CA) measurements (CAM), each CAM is carried out by applying a potential difference, relative to the OCP value of the given sequence, said reference OCP value (Vref), between the sample and a reference electrode, a potential difference applied in at least one of the CAM is different of a potential difference applied in at least one other CAM, each potential difference is applied for at least 30 seconds and is comprised between 1 and 50 mV;

   the reference OCP value is the last or one of the last OCP values measured or a mean OCP value calculated from the last 0.1% of the OCP values measured; the method further comprises a step of determining the corrosion rate of the sample from the EIS data and/or from the CA data.

2. Method according to claim 1, wherein a CA intensity value, said stabilized CA intensity value, is obtained from each of the at least two CAM, the stabilized CA intensity value is the last or one of the last CA intensity values measured or a mean CA intensity value calculated from the last 0.1% of the CA intensity values measured.

3. Method according to claim 1 or 2, wherein the single electrochemical measurement technique is a Cyclic Voltammetry (CV) measurement, said CVM1, the CVM1 is carried out over a potential window, said $\Delta V1$, lower than 30 mV; and wherein the corrosion rate is determined from the CVM1 data.

4. Method according to the preceding claim, wherein the CVM1 comprises at least one scan cycle, each of the scan cycle comprises a forward scan from [Vref] to [Vref+(($\Delta V1$)/2)] then to [Vref-(($\Delta V1$)/2)] then to [Vref] or, respectively, from [Vref] to [Vref-(($\Delta V1$)/2)] then to [Vref+(($\Delta V1$)/2)] then to [Vref] and a reverse scan from [Vref] to [Vref-(($\Delta V1$)/2)] then to [Vref+(($\Delta V1$)/2)] then to [Vref] or, respectively, from [Vref] to [Vref+(($\Delta V1$)/2)] then to [Vref-(($\Delta V1$)/2)] then to [Vref].

5. Method according to any of the preceding claims, wherein the single electrochemical measurement technique is a Cyclic Voltammetry (CV) measurement, said CVM2, the CVM2 is carried out over a potential window, said $\Delta V2$, higher than 30 mV and lower than 200 mV; and wherein the corrosion rate is determined from the CVM2 data.

6. Method according to the preceding claim, wherein the CMV2 comprises at least two scan cycles, at least one scan cycle comprises a forward scan from [Vref] to [Vref+((ΔV2)/2)] then to [Vref-((ΔV2)/2)] then to [Vref] and a reverse scan from [Vref] to [Vref-((ΔV2)/2)] then to [Vref+((ΔV2)/2)] then to [Vref] and at least one scan cycle comprises a forward scan from [Vref] to [Vref-((ΔV2)/2)] then to [Vref+((ΔV2)/2)] then to [Vref] and a reverse scan from [Vref] to [Vref+((ΔV2)/2)] then to [Vref-((ΔV2)/2)] then to [Vref].

7. Method according to any of the preceding claims, further comprising the steps of:

   - determining a charge transfer resistance of the sample from the EISM data, and/or
   - determining a polarization resistance of the sample from the CAM data and/or from the CVM1, and/or
   - determining a corrosion current density of the sample from the CVM2, and
   - determining the corrosion rate of the sample from the charge transfer resistance and/or from the polarization resistance and/or the corrosion current density.

8. Method according to any of the preceding claims, wherein the method comprises at least two sequences and each sequence comprises a different single electrochemical measurement technique.

9. Method according to any of the preceding claims, wherein a sequence comprising a CAM as single electrochemical measurement technique is carried out previously to a sequence comprising an EISM as single electrochemical measurement technique.

10. Method according to any of claims 3 to 9, wherein a sequence comprising a CVM1 as single electrochemical measurement technique is carried out previously to a sequence comprising an EISM as single electrochemical measurement technique and/or to a sequence comprising a CAM as single electrochemical measurement technique.

11. Method according to any of claims 5 to 10, wherein a sequence comprising an EISM as single electrochemical measurement technique is carried out previously to a sequence comprising a CVM2 as single electrochemical measurement technique.

12. Method according to claim 3 or claim 4 or to any of claims 5 to 11 taken in combination with claim 3, wherein a sequence comprising an EISM as single electrochemical measurement technique is carried out subsequently to a sequence comprising a CAM as single electrochemical measurement technique and/or to a sequence comprising a CVM1 as single electrochemical measurement technique.

13. Method according to claim 3 or claim 4 or to any of claims 5 to 12 taken in combination with claim 3, wherein a sequence comprising a CVM2 as single electrochemical measurement technique is carried out subsequently to a sequence comprising a CAM as single electrochemical measurement technique and/or to a sequence comprising a CVM1 as single electrochemical measurement technique and/or to a sequence comprising an EISM as single electrochemical measurement technique.

14. Method according to claim 3 or claim 4 or to any of claims 5 to 13 taken in combination with claim 3, comprising:

   - a sequence comprising a CVM1 as single electrochemical measurement technique, then
   - a sequence comprising a CAM as single electrochemical measurement technique, then
   - a sequence comprising an EISM as single electrochemical measurement technique, then
   - at least one sequence comprising a CVM2 as single electrochemical measurement technique.

15. Method according to any of the preceding claims, wherein a mean value of the corrosion rate of the sample is calculated from two or more corrosion rate values, at least two corrosion rate values being determined from data measured by at least two different sequences.

16. Data processing apparatus comprising means for carrying out the method according to any of claim 1 to 15.

17. Computer program comprising instructions which, when the program is executed by a computer, cause the computer to carry out the method according to any of claim 1 to 15.

18. Computer-readable medium comprising instructions which, when executed by a computer, cause the computer to carry out the method according to any of claim 1 to 15.

FIGURE 1  FIGURE 2

FIGURE 15

FIGURE 3

FIGURE 4

FIGURE 5

FIGURE 6

FIGURE 7

FIGURE 8

FIGURE 9

FIGURE 10

FIGURE 11

FIGURE 12

FIGURE 13

FIGURE 14

Europäisches
Patentamt

European
Patent Office

Office européen
des brevets

# EUROPEAN SEARCH REPORT

Application Number

EP 23 30 5744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LIANG ZHIPENG ET AL: "Corrosion evolution of Cu-Pb alloys from the Western Zhou Dynasty in simulated archaeological soil environment", JOURNAL OF ELECTROANALYTICAL CHEMISTRY, vol. 899, 115688, 9 September 2021 (2021-09-09), pages 1-16, XP086806684, ISSN: 1572-6657, DOI: 10.1016/J.JELECHEM.2021.115688 [retrieved on 2021-09-09] * abstract * * page 2, right-hand column, paragraph 2 * * page 3, right-hand column, paragraph 4 – page 6, left-hand column, paragraph 1 * * page 8, left-hand column, paragraph 2 – page 10, right-hand column, paragraph 1 * * figures 2,6-11 * ----- | 1-18 | INV. G01N17/02 |
| Y | YINGRUI ZHANG ET AL: "Corrosion Monitoring Under Iron Sulfide Deposit: Testing Method Development", PROCEEDINGS OF THE 2014 CORROSION CONFERENCE, 4159, 1 January 2014 (2014-01-01), pages 1-15, XP055471382, * abstract * * page 3, paragraph 1 – page 4, paragraph 3 * * page 7, paragraph 3-4 * * figures 11,12 * ----- -/-- | 1-18 | TECHNICAL FIELDS SEARCHED (IPC) G01N G21F |

The present search report has been drawn up for all claims

| Place of search | Date of completion of the search | Examiner |
|---|---|---|
| The Hague | 16 October 2023 | Couteau, Olivier |

EPO FORM 1503 03.82 (P04C01)

Europäisches
Patentamt

European
Patent Office

Office européen
des brevets

## EUROPEAN SEARCH REPORT

**Application Number**

EP 23 30 5744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MICHAEL GRABOWSKI ET AL: "Influence of Ca2+ in Deicing Salt on the Corrosion Behavior of AM50 Magnesium Alloy", CORROSION, NATIONAL ASSOCIATION OF CORROSION ENGINEERS, NACE, US, vol. 70, no. 10, 1 October 2014 (2014-10-01), pages 1008-1023, XP001592185, ISSN: 0010-9312, DOI: 10.5006/1268 [retrieved on 2014-05-22] * abstract * * page 1010, left-hand column, paragraph 3 – right-hand column, paragraph 4 * * page 1012, left-hand column, paragraph 2 – right-hand column, paragraph 1 * * figure 4 * | 1-18 | |
| A | ROBINEAU MATHIEU ET AL: "Mechanisms of localized corrosion of carbon steel associated with magnetite/mackinawite layers in a cement grout", MATERIALS AND CORROSION, vol. 72, no. 1-2, 23 July 2020 (2020-07-23), pages 194-210, XP093090369, Hoboken, USA ISSN: 0947-5117, DOI: 10.1002/maco.202011696 * abstract * * page 197, right-hand column, paragraph 2 – page 198, left-hand column, paragraph 2 * | 1-18 | **TECHNICAL FIELDS SEARCHED (IPC)** |

The present search report has been drawn up for all claims

| Place of search | Date of completion of the search | Examiner |
|---|---|---|
| The Hague | 16 October 2023 | Couteau, Olivier |

EPO FORM 1503 03.82 (P04C01)

**EP 4 462 103 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 3031103 A1